# EUROPEAN PATENT SPECIFICATION

(11) **EP 1 741 763 B1**
(45) Date of publication and mention of the grant of the patent: **31.12.2008**
(21) Application number: 06252913.6
(22) Date of filing: 06.06.2006
(51) Int. Cl.: C09D 167/00, D06M 15/00

(54) **Curable compositions comprising reactive beta-hydroxyamides from lactones**
Härtbare Zusammensetzungen, die reaktive Beta-Hydroxylamide aus Lactonen enthalten
Compositions durcissables contenant des beta-hydroxyamides réactives provenant de lactones

(30) Priority: 08.07.2005 US 697603 P
(43) Date of publication of application: 10.01.2007
(73) Proprietor: Rohm and Haas Company, Philadelphia, PA 19106-2399 (US)
(72) Inventor: Finch, William C., Blue Bell, Pennsylvania 19422 (US); Tang, Xun, Dresher, Pennsylvania 19025 (US)
(74) Representative: Kent, Venetia Katherine

(56) References cited:
- EP-A2- 0 649 890
- WO-A-01/98257
- WO-A-99/36369
- US-A- 4 076 917

## Description

The present invention relates to low cost curable aqueous binder compositions having low binder cure energy requirements, to methods of use thereof as binders for fibrous substrates and composites, and to the products produced by those methods. More particularly, the present invention relates to thermosetting binder resins comprising one or more polyacid, optionally one or more polyol, and one or more reactive β-hydroxyamide group containing polyol which is the reaction product of a lactone and an alkanolamine.

Binders for non-woven materials, such as fiberglass insulation, have mostly contained resins, such as formaldehyde condensate resins that include ureaformaldehyde (UF) and phenol-formaldehyde (PF). These resins are inexpensive, however, they formaldehyde is a known carcinogen, so users of PF resins are looking for less harmful alternatives. Further, such resins tend to yellow over time and can emit a foul odor when wet. In addition, due to health and environmental risks commonly associated with formaldehyde, as well as existing and proposed regulations directed to the lowering or elimination of formaldehyde, there has long been a need for a curable composition which contains or emits, on storage or during curing, little or, preferably, no formaldehyde.

Recently, formaldehyde-free aqueous polyacid or acrylic thermosetting binders have been introduced which, despite being odor-free and emitting virtually no formaldehyde, have increased the cost of manufacturing fiberglass insulation or other fibrous products. The increased cost stands in stark contrast with the costs associated with the use of formaldehyde condensates. In addition, such resinous thermoset binders, may require more energy to cure than phenol/formaldehyde binders. Fiberglass and other heat-resistant non-woven substrates are thermally stable enough to withstand the higher cure energy required for the acrylic thermoset binder. However, high cure energy requirements of formaldehyde-free polyacid or acrylic thermosetting binders limit their use on thermally sensitive substrates such as polyesters, wood, lignocellulosic or cellulosic materials.

U.S. Patent No. 6,706,853 to Stannsens et al., discloses binders for mineral fibers which comprise the resinous reaction product of an alkanolamine and a dicarboxylic acid or lactone mixed with water. The reported advantage of such compositions lies in the low viscosity of the binder. However, the curing reaction of the Stannsens et al. binder was sufficiently slow that binding strength was measured only after a 2-hour cure at 200°C (see Example 8 "Grit Bar Test" (dry strength) and Table 1). Further, the disclosed binders from alkanolamines and dicarboxylic acids have proven expensive to obtain or to make.

Accordingly, the present inventors have endeavored to provide aqueous thermosetting binders for fibrous substrates and composites that provide an effective level of curing at lower temperatures and shorter times to lower the costs of using such binders, and to allow for treatment of heat-sensitive substrates. Further, the present inventors have endeavored to provide aqueous thermosetting binders at a cost that can compete with phenol/formaldehyde resins, without posing the health and environmental risks of formaldehyde emissions.

The present invention in its various aspects is as set out in the appended claims.

The present invention provides curable compositions comprising: one or more polyacid comprising at least two carboxylic acid groups, anhydride groups, or salts thereof;

(ii) optionally, one or more polyol comprising at least two hydroxyl groups; and

(iii) one or more reactive β-hydroxyamide group-containing polyol of the following formula (I), which is the reaction product of a lactone or other cyclic ester and an alkanolamine:

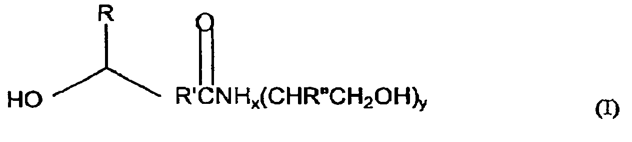

in which formula, R and R" independently represent H, or any monovalent C₁ to C₁₈ linear or branched alkyl radical, which radical may comprise one or two aryl or cycloalkyl group, one or more hydroxyl, amine, thiol, amide, carboxyl or alkenyl group, or combinations thereof; R' represents either a covalent bond or a divalent C₁ to C₅ alkylene radical where the alkylene radical may bear alkyl group substituents; y is the integer 1 or 2; x is 0 or 1, such that (x + y) =2;

wherein the ratio of the number of equivalents of said carboxylic acid groups, anhydride groups, or salts thereof to the number of equivalents of said hydroxyl groups is from 1/0.01 to 1/3, preferably 1/0.2 or greater.

The compositions of the present invention provide concentrates that can be diluted with water or one or more aqueous solvent to provide aqueous, curable binder compositions. Preferably, the curable compositions of the present invention contain no accelerator or strong acid and, therefore, are less corrosive to processing equipment in use. However, to improve their cure rate, for example, at low temperature, the compositions of the present invention may further comprise one or more phosphorous-containing accelerator. Still further, the addition of one or more basic polyol (iii), such as an alkanolamine, preferably triethanolamine, may aid in reducing the corrosivity of the curable compositions.

For weatherable and waterproofing applications, e.g. home fiberglass insulation batting, the compositions of the present invention may further comprise one or more reactive waterproofing agents or reactive amphiphilic polyols, which are not burnished from and do not exude from the substrate, or waterproofing emulsion (co)polymers,.

For use on inorganic oxide substrates, e.g. glass, the curable compositions of the present invention may further comprise one or more coupling agents, such as silanes.

Additionally, the present invention provides methods for treating substrates comprising:

forming a curable aqueous composition comprising admixing with water or one or more aqueous solvent (i) one or more polyacid comprising at least two carboxylic acid groups, anhydride groups, or salts thereof; (ii) optionally, one or more polyol comprising at least two hydroxyl groups; and (iii) one or more reactive β-hydroxyamide group containing polyol of the following formula (I), formed by the reaction of a lactone or other cyclic ester and an alkanolamine:

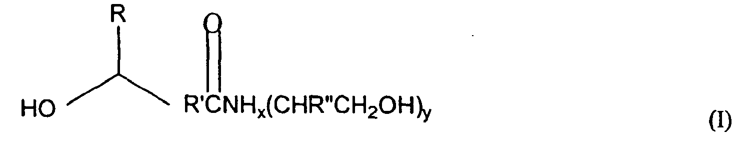

in which formula, R and R" independently represent H, or monovalent C₁ to C₁₈ linear or branched alkyl radicals which may contain aryl, cycloalkyl and alkenyl groups; R' represents either a covalent bond or a divalent C₁ to C₅ alkylene radical where the alkylene radical may bear alkyl group substituents; y is the integer 1 or 2; x is 0 or 1, such that (x + y) =2; wherein the ratio of the number of equivalents of said carboxylic acid groups, anhydride groups, or salts thereof to the number of equivalents of said hydroxyl groups is from 1/0.01 to 1/3;

contacting said substrate with said curable aqueous composition or, alternatively, applying said curable aqueous composition to said substrate; and

heating said curable aqueous composition at a temperature of from 100°C to 400°C.

Further, the present invention provides fibrous articles, non-woven articles or composites prepared by the methods of the present invention, including heat-sensitive wood, cellulosic, paper, textile and plastic substrates, such as polyester fiber filters for air ducts; and heat resistant woven, non-woven substrates, such as fiberglass insulation, and composite substrates, such as sheets and ceiling panels.

The Applicants have discovered low energy demand, easily processed curable compositions which develop high strength early in cure. The aqueous polyacid and polyol mixtures of the present invention comprise as part or all of the polyol one or more β-hydroxyamide compounds of formula (I), formed by reaction of lactones with alkanolamines. The reactive β-hydroxyamide group containing polyols may be made by simple mixing of the lactones and alkanolamines at a relatively low cost, preferably from an anhydrous or "dry" reaction mixture. The reaction of lactones or lactides and alkanolamines does not liberate volatile organic by-products and does not require the elimination of water to be driven to completion. Accordingly, the formation of the reactive β-hydroxyamide group containing polyols (iii) minimizes by-product formation, increasing amide yield and avoiding the need for costly product purification and free water removal. Moreover, any "by products" formed in making the reactive β-hydroxyamide group containing polyol (iii) in the curable compositions of the present invention will react into the cured binder.

The low energy curing compositions of the present invention provide thermosetting polyacid binder compositions which can be cured without addition of corrosive strong acids, and without the need for phosphorous-containing accelerators. Further, such compositions may be cured at temperatures as low as from 100 to 250°C, preferably below 200°C, or, more preferably, up to 190°C, or, even more preferably, up to 150°C so as to allow treatment of paper or wood products, heat-sensitive textiles, such as woven and non-woven polyester, rayon, nylon, and animal fibers, various composites, such as engineered wood or medium density fiberboard (MDF), and sheets and composites, such those made from cellulosics. In addition, the curable compositions may be used to treat heat-resistant composites and sheets, like aramid fiber composites, such as brake shoes, as well as wovens and non-wovens, such as fiberglass and mineral wool batting for insulation.

The one or more reactive β-hydroxyamide group containing polyol (iii) may be used as a reactive defoamer, thereby eliminating the need for expensive non-reactive anti-foaming agents which can exude to or be burnished from the surface, and thus be removed from treated substrates.

Desirable β-hydroxyamide polyols can be produced by reaction of lactones or lactides with alkanolamines. Specific, non-limiting, examples of this reaction are the reaction of either caprolactone or butyrolactone with diethanolamine to form their corresponding β-hydroxyamide products. No highly volatile organic by-products are formed by this reaction. Potential by-products, including the acid generated by hydrolysis of the lactone if non-anhydrous conditions are used and un-reacted diethanolamine, can cure into the thermoset network. Accordingly, the curable compositions of the present invention resist exuding from substrates treated with them.

All ranges recited are inclusive and combinable. For example, an average particle size of 1.3 µm or more, for example, 1.5 µm or more, which may be 4.5 µm or less, or 4.0 µm or less, will include ranges of 1.3 µm or more to 4.5 µm or less, 1.5 µm or more to 4.5 µm or less, 1.5 µm or more to 4.3 µm or less, and 1.3 µm or more to 4.3 µm or less.

Unless otherwise indicated, all temperature and pressure units are standard temperature and pressure (STP).

All phrases comprising parenthesis denote either or both of the included parenthetical matter and its absence. For example, the phrase "(co)polymer" includes, in the alternative, polymer, copolymer and mixtures thereof.

As used herein, the phrase "addition polymer" refers to any (co)polymer that comprises ethylenically unsaturated monomers as (co)polymerized units, such as the polymeric polyacid and the copolymer.

As used herein, the phrase "alk(en)yl" means any combination of alkyl, alkenyl or aromatic groups having five or more carbon atoms, the alkyl groups are as defined previously, the alkenyl group may comprise a branched, straight chain or cyclic carbon array having at least one double bond or at least one aromatic group, such as phenyl or naphthyl.

As used herein, the phrase "alkyl" means any aliphatic alkyl group having one or more carbon atoms, the alkyl group including n-alkyl, s-alkyl, i-alkyl, t-alkyl groups or cyclic aliphatics containing one or more 5, 6 or seven member ring structures.

As used herein, the phrase "aqueous" or "aqueous solvent" includes water and mixtures composed substantially of water and water-miscible solvents.

As used herein, the phrase "based on the total weight of binder solids" refers to weight amounts in comparison to the total weight amount of polyacids, emulsion (co)polymers, polyols, including reactive β-hydroxyamide group containing polyols, reactive waterproofing agents, and reactive amphiphilic polyols.

As used herein, the phrases "(C₃-C₁₂)-" of "(C₃-C₆)-" refer to organic compounds or structural portions of organic compounds containing 3 to 12 carbon atoms and 3 to 6 carbon atoms, respectively.

As used herein, unless otherwise indicated, the phrase "copolymer" includes, independently, copolymers, terpolymers, block copolymers, segmented copolymers, graft copolymers, and any mixture or combination thereof.

As used herein, the phrase "delaminated" and "exfoliated" clay refer to layered silicates in which the layers have been separated from each other.

As used herein, the phrase "emulsion polymer" means polymers dispersed in an aqueous medium that has been prepared by emulsion polymerization.

As used herein, the phrase "formaldehyde-free composition" refers to compositions substantially free from added formaldehyde, and which do not liberate substantial formaldehyde as a result of drying and/or curing.

As used herein, the phrase "heat-resistant fibers" means fibers which are substantially unaffected by exposure to temperatures above about 125°C.

As used herein, the term "maleic" comprises either maleic acid or maleic anhydride independently of each other, unless otherwise indicated.

As used herein, the term "(meth)acrylate" means acrylate, methacrylate, and mixtures thereof and the term "(meth)acrylic" used herein means acrylic, methacrylic, and mixtures thereof.

As used herein, unless otherwise indicated, the phrase "molecular weight" refers to the weight average molecular weight of a polymer as measured by gel permeation chromatography (GPC) calibrated with polyacrylic acid standards.

As used herein, the phrase "monomer feeds" means the monomers and any other reactants that are fed directly or indirectly into the container or vessel in which the polymerization reaction takes place.

As used herein, the phrase "polybasic" means having at least two reactive acid functional groups (see e.g. Hawley's Condensed Chemical Dictionary, 14th Ed., 2002, John Wiley and Sons, Inc.).

As used herein, the phrases "polyol" and "polyhydroxy" refer to organic compounds or structural portions of organic compounds containing two or more hydroxy groups.

As used herein, the phrase "wt.%" stands for weight percent.

Preferably, the curable compositions are formaldehyde-free. To minimize the formaldehyde content of the aqueous composition, it is preferred, when preparing a polymer-containing formaldehyde-free curable composition, to use polymerization adjuncts and additives such as, for example, initiators, reducing agents, chain transfer agents, curing agents, biocides, surfactants, emulsifiers coupling agents, anti-foaming agents, dust suppressing agents, fillers and the like, which are themselves free from formaldehyde, do not generate formaldehyde during the polymerization process, and do not generate or emit formaldehyde during the treatment of heat-resistant nonwovens.

The formaldehyde-free curable compositions contain one or more polyacid (i). The polyacid must be sufficiently nonvolatile that it will substantially remain available for reaction with the polyol in the composition during heating and curing operations. The polyacid may be one or more polymeric polyacid or low molecular weight polybasic acid.

Low molecular weight polyacids of the present invention are compounds having with a molecular weight less than about 1000 bearing at least two carboxylic acid groups, anhydride groups, or salts thereof, such as, polybasic carboxylic acids and anhydrides, or their salts. Exemplary polybasic acids and anhydrides may include, citric acid, butane tricarboxylic acid, maleic acid, maleic anhydride, fumaric acid, succinic acid, succinic anhydride, sebacic acid, azelaic acid, adipic acid, glutaric acid, tartaric acid, itaconic acid, trimellitic acid, hemimellitic acid, trimesic acid, tricarballylic acid, cyclobutane tetracarboxylic acid, 1,2,3,4-butanetetracarboxylic acid, pyromellitic acid, oligomers of carboxylic acids, and the like, and salts thereof. Optionally, the low molecular weight polybasic carboxylic acid, anhydride or salt thereof may be mixed with the hydroxyl-containing compound, under reactive conditions, prior to mixing with one or more polymeric polyacid.

The one or more polymeric polyacid may be chosen from, for example, polyesters containing at least two carboxylic acid groups and addition (co)polymers or oligomers containing at least two copolymerized carboxylic acid-functional monomers. Preferably, the one or more polymeric polyacid is chosen from addition (co)polymers formed from at least one ethylenically unsaturated monomer, most preferably polymers and copolymers of (meth)acrylic acid. The addition (co)polymers may be in the form of solutions of the addition (co)polymer in an aqueous medium; in the form of aqueous dispersions such as, for example, an emulsion-polymerized dispersion; or in the form of aqueous suspensions.

Suitable addition (co)polymers contain at least two carboxylic acid groups, anhydride groups, or salts thereof formed from the addition polymerization of one or more ethylenically unsaturated carboxylic acids, anhydrides and salts thereof and, optionally, one or more comonomers. Ethylenically unsaturated carboxylic acids or anhydrides may include, for example, methacrylic acid, acrylic acid, crotonic acid, fumaric acid, maleic acid, 2-methyl maleic acid, itaconic acid, citraconic acid, mesaconic acid, cyclohexenedicarboxylic acid, 2-methyl itaconic acid, α-methylene glutaric acid, monoalkyl maleates, and monoalkyl fumarates, and salts thereof; ethylenically unsaturated anhydrides, such as, for example, maleic anhydride, itaconic anhydride, acrylic anhydride, and methacrylic anhydride, and salts thereof. Preferred monomers that may include carboxylic acid groups, anhydride groups, or salts are (meth)acrylic acid and maleic acid, and salts thereof, and maleic anhydride. The monomers including carboxylic acid groups, anhydride groups, or salts are used at a level of from 1 wt.% or more, based on the weight of the polymer, or 10 wt.% or more, or, 25 wt.% or more, preferably 30 wt.% or more, or, more preferably 75 wt.% or more, or, even more preferably 85 wt.% or more, and up to 100 wt.%, for example, up to 99 wt.%, or up to 90 wt.%.

Suitable ethylenically unsaturated comonomers may include one or more acrylic ester monomers, including methyl acrylate, ethyl acrylate, butyl acrylate, 2-ethylhexyl acrylate, decyl acrylate, methyl methacrylate, butyl methacrylate, and isodecyl methacrylate; hydroxyl group containing monomers, such as hydroxyethyl acrylate, hydroxyethyl methacrylate, hydroxypropyl methacrylate and allyloxy functional hydroxyl group-containing monomers; acrylamide or substituted acrylamides, such as t-butylacrylamide; styrene or substituted styrenes; butadiene; vinyl acetate or other vinyl esters; acrylonitrile or methacrylonitrile; and the like. Preferable comonomers include one or more ethylenically unsaturated monomer having a solubility of less than 2 g/100 g of water at 25°C, one or more allyloxy functional hydroxyl group-containing monomers; one or more phosphorous-containing comonomers, such as vinyl phosphonic acid, phosphoalkyl (meth)acrylates, or salts thereof; or one or more strong acid functional monomers, such as vinyl sulfonic acid monomers, and their salts; or mixtures of any of such comonomers.

The one or more preferred comonomers having a solubility of less than 2 g/100 g of water at 25°C may be chosen from ethyl (meth)acrylate, methyl methacrylate, butyl (meth)acrylate, styrene, mono-alkyl (meth)acrylamide, and dialkyl (meth)acrylamide. In those embodiments where the one or more addition (co)polymer is in the form of an aqueous solution, such comonomers having a solubility of less than 2 g/100 g of water at 25 °C may be included in the addition monomer mixture in the amount of 3 or more wt.%, or 10 or more wt.%, and as much as 25 wt.% or less, or 20 wt.% or less, or 15 wt.% or less, based on the total weight of monomers used to make the addition copolymer.

In those embodiments where the one or more polyacid (i) is an addition (co)polymer in the form of an aqueous dispersion, emulsion or aqueous suspension, the suitable ethylenically unsaturated comonomers are used at a level of 50 wt.% to 99 wt.% or more preferably 60 wt.% to 95 wt.% or even more preferably 70 wt.% to 85 wt.% based on total monomer.

The one or more preferred allyloxy functional hydroxyl group-containing monomers may be chosen from hydroxyl group-including monomers of Formula II,

CH2=C(R1)CH(R2)OR3 (II)

wherein R1 and R2 are independently selected from hydrogen, methyl, and -CH2OH; and R3 is selected from hydrogen, -CH2CH(CH3)OH, -CH2CH2OH, -CH2C(CH2OH)2C2H5, and (C3-C12) polyol residues; or of Formula III,

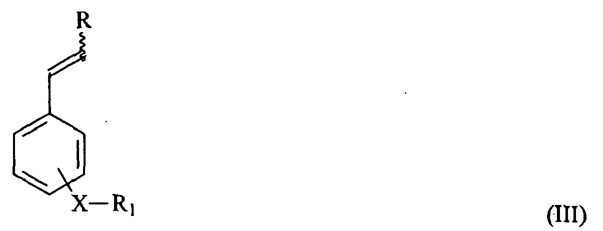

wherein R is selected from CH3, C1, Br, and C6H5; and R1 is selected from H, OH, CH2OH, CH(CH3)OH, glycidyl, CH(OH)CH2OH, and (C3-C12)polyol residues. Such allyloxy functional hydroxyl-group containing monomers may be included in the addition monomer mixture at a level of up to 99 wt.%, or up to 70 wt.% , preferably, up to 30 wt.%, based on the total weight of the monomer mixture, and can be used in amounts of 1 wt.% or more, or 10 wt.% or more, based on the total weight of the monomer mixture.

The (C₃-C₁₂)-containing polyols useful to prepare allyloxy compounds of Formula II include, for example, (C₃-C₆)-polyhydroxy compounds such as erythritol, pentaerythritol and glycerine; sugar alcohols such as xylitol, sorbitol and mannitol; and, polyhydroxy aldehyde and ketone sugars such as glucose, fructose, galactose, maltose, sucrose, lactose, erythrose and threose. Examples of suitable unsaturated non-ionizable monomers of Formula (II) include allyl alcohol, methallyl alcohol, allyloxyethanol, allyloxypropanol, 3-allyloxy-1,2-propanediol, trimethylolpropane mono allyl ether, allyloxy(sugars), such as allyloxy(glucose), allyloxy(fructose) and allyloxy(mannose), erythritol monoallyl ether, pentaerythritol monoallyl ether, and 1-butene-3,4-diol. The most preferred monomers of Formula II and Formula III are trimethylolpropane mono allyl ether and 3-allyloxy-1,2-propanediol.

In those embodiments where the one or more addition (co)polymer is in the form of an aqueous dispersion, emulsion or aqueous suspension, and low levels of pre-crosslinking or gel content are desired, low levels of copolymerized multi-ethylenically unsaturated monomers such as, for example, allyl methacrylate, diallyl phthalate, 1,4-butylene glycol dimethacrylate, 1,6-hexanediol diacrylate, and the other (poly)glycol di(meth)acrylates, can be used at a level of from about 0.01 wt.% to about 5 wt.% , based on the total weight of the monomer reactants used to make the (co)polymer. Further, where the addition (co)polymer is in the form of an aqueous dispersion, emulsion or suspension, the average diameter of the copolymer particles can be from 80 nanometers to 1000 nanometers, as measured using a Brookhaven BI-90 Particle Sizer, which employs a light scattering technique. However, polymodal particle size distributions, such as those disclosed in United States Patent Nos. 4,384,056 and 4,539,361, can be employed. Further, where the addition (co)polymer is in the form of an aqueous dispersion and the (co)polymer particles are made up of two or more mutually incompatible copolymers. These mutually incompatible copolymers can be present in various morphological configurations such as, for example, core/shell particles, core/shell particles with shell phases incompletely encapsulating the core, core/shell particles with a multiplicity of cores, interpenetrating network particles, agglomerates of incompatible polymers and the like.

The one or more polyacid addition (co)polymer may suitably have a weight average molecular weight of 1000 or more, and the molecular weight may range as high as to 10,000,000 or, preferably, as high as 250,000, or, more preferably, as high as 100,000, yet even more preferably, as high as 10,000, yet even still more preferably, as high as 5,000. Higher molecular weight alkali-soluble resins can lead to curable compositions which exhibit excessive viscosity. Accordingly, when the addition polymer is an alkali-soluble resin which comprises the reaction product of one or more carboxylic acid, anhydride, or salt thereof, in the amount of from 5 wt.% or more, for example 30 wt.%, based on the total weight of the monomers used to make the addition polymer, a molecular weight from 1000 to 20,000 is preferred.

In another embodiment of the present invention, the polyacid addition (co)polymers may be oligomers or co-oligomers of ethylenically-unsaturated carboxylic acids prepared by free radical addition polymerization, having a number average molecular weight of from 300 to 900.

In yet another embodiment of the present invention, the compositions comprise one or more polymeric polyacids (i) and, further, comprise one or more low molecular weight polybasic carboxylic acid, anhydride or salt thereof having a molecular weight of 1000 or less, preferably 500 or less, and most preferably 200 or less.

The one or more addition (co)polymer may be prepared by solution polymerization, emulsion polymerization, or suspension polymerization techniques for polymerizing ethylenically-unsaturated monomers which are well known in the art. When it is desired to use emulsion polymerization, anionic or nonionic surfactants, or mixtures thereof, may be used. The polymerization may be carried out by various means such as, for example, with all of the one or more monomer in the reaction kettle at the beginning of the polymerization reaction, with a portion of the monomer in emulsified form present in the reaction kettle at the beginning of the polymerization reaction, or with a small particle size emulsion polymer seed present in the reaction kettle at the beginning of the polymerization reaction.

The polymerization reaction to prepare the copolymer component can be initiated by various methods known in the art, such as, preferably, by using the thermal decomposition of one or more initiators, for example, by using an oxidation-reduction reaction ("redox reaction") to generate free radicals to effect the polymerization. Thermal initiators may comprise peracids, such as persulfates, perborates, and periodates. Redox initiator systems may contain at least one peroxide-containing compound in combination with a redox co-initiator, for example, a reductive sulfur compound such as a bisulfite, sulfite, thiosulfate, dithionite, or tetrathioate of alkali metals and ammonium compounds. Thus, it is possible to employ combinations of peroxodisulfates with alkali metal hydrogen sulfites or ammonium hydrogen sulfites, for example, ammonium peroxydisulfate and ammonium bisulfite. The ratio of peroxide-containing compound to redox co-initiator is typically from 30:1 to 0.05:1.

In combination with the initiators, it is possible to use, in addition, transition metal catalysts, such as salts of iron, cobalt, nickel, copper, vanadium, and manganese. Suitable salts include, for example, iron (II) sulfate, cobalt (II) chloride, nickel (II) sulfate, and copper (I) chloride. The transition metal catalyst may be used in a concentration of from 0.1 to 1,000 ppm, based on the monomers in the curable composition.

Preferably, the addition (co)polymer may be polymerized in the presence of one or more chain transfer agents to prepare (co)polymers of low average molecular weight. Customary regulators may be used, for example, organic compounds containing SH groups, such as 2-mercaptoethanol, 2-mercaptopropanol, mercaptoacetic acid or esters thereof, mercaptopropionic acid or esters thereof, tert-butylmercaptan, n-octylmercaptan, n-dodecylmercaptan, and tert-dodecymercaptan; C₁-C₄ aldehydes, such as acetaldehyde, propionaldehyde; hydroxylammonium salts, such as hydroxylammonium sulfate; formic acid; sodium bisulfite or isopropanol. The addition (co)polymer may be formed in the presence of a phosphorous-containing regulator, such as, for example, hypophosphorous acid and its salts, e.g. sodium hypophosphite, as is disclosed in U.S. Patent No. 5,294,686, so as to incorporate the optional phosphorous-containing species in the polyacid (co)polymer molecule. The regulators are generally used in amounts of from 0 to 40 weight percent, preferably from 0 to 15 weight percent, based on the weight of the monomers in the curable composition.

The addition (co)polymers can be prepared in water or in solvent/water mixtures such as, for example, i-propanol/water, tetrahydrofuran/water, and dioxane/water.

The manner in which the (co)monomers may be fed to a reaction container or vessel may vary. No matter the method of polymerization, the preferred total feed time i.e. the time required to feed all of the reaction mixture into the reaction container may range 2 hour or less, more preferably, 1 hour or less.

In one embodiment of the method of polymerization, the composition of the monomer feeds remains substantially the same throughout the polymerization process. Alternatively, the comonomer feed composition may be adjusted during the duration of the raw material feeds. Further, the method of polymerization, the (co)monomers or mixtures thereof may be fed by a semi-continuous feed.

The preferred method of polymerization is by gradual addition solution polymerization in water. In this method, part, or all of the ethylenically unsaturated (co)monomer or monomer mixture can be metered into the reactor. More preferably, the reaction container contains an initial charge of a reaction mixture comprising 10 wt.% or more of the total amount of chain transfer agent used, and a single constant feed of the remainder of the chain transfer agent is fed continuously into the reaction container.

To improve solubility in aqueous media, the carboxylic acid groups, anhydride groups, or salts thereof of the one or more addition (co)polymer may be neutralized with one or more fixed or volatile base. Preferably, the carboxylic acid groups, anhydride groups, or salts of the addition (co)polymer may be neutralized with a volatile base. By "volatile base" is meant herein one or more base which is substantially volatile under the conditions of treatment of the substrate with the curable composition. By "fixed" base is meant herein, a base which is substantially non-volatile under the conditions of treatment of the substrate with the curable composition.

According to one embodiment of the present invention, one or more volatile base permits curing of the binder composition without a strong acid. Suitable volatile bases include, for example, ammonia or volatile lower alkyl amines. Suitable fixed bases include, for example, sodium hydroxide, potassium hydroxide, sodium carbonate, and t-butylammonium hydroxide. The fixed base is sufficiently nonvolatile that it will substantially remain in the curable composition during heating and curing operation. The volatile base can be used in addition to the fixed base. Fixed multivalent bases such as, for example, calcium carbonate, may tend to destabilize aqueous dispersions if the copolymer component is used in the form of an aqueous dispersion, however, they can be used in minor amount.

The amount of one or more base utilized may be such that the carboxylic acid groups, anhydride groups, or salts thereof of the addition (co)polymer are neutralized to an extent of less than 35%, or less than 20%, or less than 5%, calculated on an equivalents basis. It is preferred not to use any neutralizing base.

In one embodiment, the curable compositions may further contain one or more strong acid or one or more polybasic acid, wherein the strong acid or polybasic acid has at least one pKa of ≤3.0. The composition may contain up to 0.2 equivalents of a strong acid, relative to the equivalents of total carboxylic acid, such as from 0.01 to 0.18 equivalents. "Total carboxylic acid" means the entire amount of the carboxylic acid present in the binder composition. The strong acid may be a mineral acid, such as, for example, sulfuric acid, or an organic acid, such as, for example, a sulfonic acid. Mineral acids are preferred.

In embodiments where the carboxylic acid groups, anhydride groups, or salts of the addition (co)polymer are neutralized with base, either volatile or fixed, the pH of the binder composition may be 9.5 or less, preferably 8.5 or less, more preferably 7.5 or less, even more preferably 6.5 or less. In embodiments where the binder composition contains a strong acid the pH of the binder composition may be 4.5 or less, preferably 3.5 or less, and even more preferably 2.5 or less.

The one or more polyol (ii) preferably contains at least three hydroxyl groups, i.e. is a trihydric polyol; however it may contain two hydroxyl groups. The polyol must be sufficiently nonvolatile that it will substantially remain available for reaction with the polyacid in the composition during heating and curing operations. The polyol may be one or more compound having a formula molecular weight of less than about 1000 bearing at least two hydroxyl groups such as, for example, (poly)ethylene glycol, diethanolamine (DEOA), glycollated ureas, 1,4-cyclohexane diol, resorcinol, catechol, and C₃ to C₈ (poly)alkylene glycols; one or more trihydric polyols which contain three or more hydroxyl groups, such as glycerol, trimethylol propane (TMP), trimethylolethane, pentaerythritol, sorbitol, triethanolamine (TEOA), 1,2,4-butanetriol, poly(vinyl alcohol), partially hydrolyzed poly(vinylacetate), sorbitol, sucrose, glucose, pyrogallol, propoxylated trimethylol propane, and propoxylated pentaerythritol, as well as mixtures thereof. Other suitable trihydric polyols having at least three hydroxyl groups may comprise reactive polyols such as, for example, β-hydroxyalkylamides such as, for example, bis-(N,N-di(β- hydroxyethyl))adipamide, as may be prepared according to the teachings of U.S. Pat. No. 4,076,917; addition (co)polymers containing at least two hydroxyl groups such as, for example, polyvinyl alcohol, partially hydrolyzed polyvinyl acetate, and addition homopolymers or copolymers comprising the polymerization product of hydroxyl group containing monomers; or mixtures and combinations thereof. Further, the polyol may comprise the one or more polymeric polyacid of the present invention, wherein the polymeric polyacid comprises the polymerization product of one or more ethylenically unsaturated carboxylic acids and one or more hydroxyl group containing monomers, such as the monomers of formula (II) or (III), above. Preferably, the one or more polyol comprises a trihydric polyol. Preferred trihydric alcohols are triethanolamine (TEOA), glycerol, and TMP. Basic polyols, such as TEOA, may raise the pH of the curable compositions formed therewith, thereby reducing the corrosivity of the curable compositions and reducing the hydrolytic sensitivity of the reactive β-hydroxyamide group containing polyol (iii).

The reactive β-hydroxyamide group containing polyol (iii) comprises the reaction product of one or more alkanolamine with one or more lactone or lactide. Suitable alkanolamines may comprise mono- or di-ethanolamines, as well as any C₁ to C₁₈ linear or branched α-alk(en)yl substituted mono- or di-ethanolamines, wherein the alk(en)yl substituent may contain aryl, cycloalkyl and alkenyl groups. Examples of substituted alkanolamines may comprise mono- or di-isopropanolamines and other mono-(1-alk(en)yl)ethanol amine or di-(1-alk(en)yl)ethanol amine. Suitable lactones may comprise lactides, glycolides, and lactones of any C₂ to C₈ hydroxycarboxylic acids, as well as dimers and oligomers thereof. Preferred lactones include any comprising 5 to 7 membered rings, such as ε-caprolactone, γ-butyrolactone and any α-C₁ to C₁₈ alk(en)yl monosubstituted forms thereof, such as α-methyl- ε-caprolactone or α-methyl- γ-butyrolactone.

The reactive β-hydroxyamide group containing polyol (iii) may be produced by simple mixing of the lactone and alkanolamine reactants, and, if needed, heating, such as when reacting dimers or oligomers of lactones. Preferably, the reactive β-hydroxyamide group containing polyol (iii) are produced in a "dry" or anhydrous mixture of the reactants.

In the curable compositions of the present invention, the reactive β-hydroxyamide group containing polyol (iii) may be used in the amount of from 10 to 100 wt.%, based on the total weight of polyol (ii) plus reactive β-hydroxyamide group containing polyol (iii), preferably 20 wt.% or more, or, more preferably, 40 wt.% or more.

In one embodiment, the curable compositions are applied to substrates for uses which need no added waterproofing agents, e.g. oven insulation and the insulation for oven mitts. However, in other embodiments where water resistance is desired, e.g. building insulation and wood composites or engineered wood, the compositions of the present invention may additionally contain one or more reactive waterproofing agents, in the amount of up to 20 wt. based on the total weight of binder solids, or up to 10 wt.%, or up to 5 wt.% , or up to 3 wt.%, and preferably in the amount of 0.1 wt.% or more, or 1.0 wt.% or more, based on the total weight of binder solids.

Suitable reactive waterproofing agents comprise any may comprise the mono- or di- hydroxyethyl amide, formed by amidation with alkanolamines of any C₅ to C₃₀ alk(en)yl group containing acids or glycerides, preferably C₈₋₁₈ alk(en)yl group containing acids or glycerides, especially those from vegetable or plant oils; it may comprise amine formed by reaction of alkanolamines with C₅ to C₃₀ alk(en)yl group containing alcohols, preferably C₈₋₁₈ alk(en)yl group containing alcohols; or it may comprise the ester formed by reaction of C₅ to C₃₀ alk(en)yl group containing carboxylic acids with trihydric polyols, e.g. glycerol to yield monoglycerides, or pentaerythritol to yield a C₅ to C₃₀ alk(en)yl monocarboxylate of a trihydric polyol. Exemplary reactive waterproofing agents comprise the mono or di β-hydroxyamides of coconut oil, respectively, known as cocamide MEA and cocamide DEA.

To improve the compatibility of the reactive waterproofing agents with the remainder of the curable compositions, and/or to further enhance waterproofing, the compositions of the present invention may additionally contain reactive amphiphilic polyols, such as C₅ to C₃₀ alkanol (poly)alkoxylates, trihydric polyol (poly)alkoxylates, trihydric polyol monoesters of C₅ to C₃₀ dicarboxylic acids, or C₅ to C₃₀ alkylene glycols, in the amount of up to 20 wt.%, based on the total weight of binder solids, or up to 10 wt.%, or up to 5 wt.%, or up to 3 wt.%, and preferably in the amount of 0.1 wt.% or more, or 1.0 wt.% or more, based on the total weight of binder solids. Suitable reactive amphiphilic polyols may comprise such as C₅ to C₃₀ alkanol (poly)alkoxylates, trihydric polyol (poly)alkoxylates or trihydric polyol monoesters of C₅ to C₃₀ (di)carboxylic acids. Examples of suitable trihydric reactive amphiphilic polyols may comprise (poly)propoxylated pentaerythritol, available as POLYOL PS 50 from Perstorp Specialty Chemicals, Perstorp, Sweden, or (poly)propoxylated TMP, available as POLYOL TS 30 from Perstorp Specialty Chemicals, Perstorp, Sweden, and pentaerythritol or TMP monocaprylate. Examples of suitable dihydric reactive amphiphilic polyols include C₈ to C₁₈ alkanol (poly)propoxylates, fatty alcohol (poly)propoxylates, ethoxylated tallow amine, available as TOXIMUL^{™} from Stepan Company, Northfield, IL, ethoxylated linear C₉ to C₁₆ alkanols, available as TOMADOL^{™} from Tomah Products, Inc., Milton, WI, and castor oil propoxylates.

In another embodiment of the present invention, the waterproofing of the curable compositions may be enhanced by adding one or more waterproofing emulsion (co)polymer such as is disclosed in U.S. patent Publication no. 20050048212A1. Suitable waterproofing emulsion (co)polymers include, as polymerized units, at least one copolymerized ethylenically unsaturated nonionic acrylic monomer, preferably containing greater than 50 wt.%, or, more preferably, greater than 60 wt.%, based on the weight of all monomers, of copolymerized units from (meth)acrylate esters, (meth)acrylamides, (meth)acrylonitriles, and (meth)acrylic acids. By "nonionic monomer" herein is meant that the copolymerized monomer residue does not bear an ionic charge between pH=1-14. Suitable ethylenically unsaturated nonionic acrylic monomers used to make th waterproofing emulsion (co)polymers include, for example, the ethylenically unsaturated comonomers used in making the addition copolymeric polyacids (i); for example, C₁₋₁₈ alkyl (meth)acrylates, e.g. lauryl methacrylate; hydroxyalkyl(meth)acrylates; vinylaromatic compounds, such as styrene, α-methylstyrene, p-methylstyrene, ethylvinylbenzene, vinylnaphthalene, vinylxylenes, vinyltoluenes, and the like; vinyl acetate, vinyl butyrate and other vinyl esters; vinyl monomers such as vinyl chloride, vinyl toluene, vinyl benzophenone, and vinylidene chloride; acrylamides, alkyl-substituted acrylamides and hydroxyl-substituted acrylamides, such as N-tert-butylacrylamide and methylolacrylamide; and beta-hydroxyalkylamides. The waterproofing emulsion (co)polymer may contain copolymerized multi-ethylenically unsaturated monomers such as, for example, allyl methacrylate, diallyl phthalate, 1,4-butylene glycol dimethacrylate, 1,2-ethylene glycol dimethacrylate, 1,6-hexanediol diacrylate, butadiene, and divinyl benzene.

The waterproofing emulsion polymer may further comprise the reaction product of one or more ethylenically unsaturated carboxylic acids, anhydrides and salts thereof used to make addition polymeric polyacids (i), and may also include partial ester monomers, such as, monomethyl itaconate, monoalkyl fumarate, monobutyl fumarate; sulfonic monomers, such as 2-acrylamido-2-methylpropane sulfonic acid, vinyl sulfonic acid, styrene sulfonic acid, 1-allyloxy-2-hydroxypropane sulfonic acid, alkyl allyl sulfosuccinic acid, sulfoethyl (meth)acrylate; phosphoalkyl (meth)acrylates such as phosphoethyl (meth)acrylate, phosphopropyl (meth)acrylate, and phosphobutyl (meth)acrylate, phosphoalkyl crotonates, phosphoalkyl maleates, phosphoalkyl fumarates, phosphodialkyl (meth)acrylates, phosphodialkyl crotonates, and allyl phosphate.

The ratio of the number of equivalents of carboxy, anhydride, or salts thereof in the curable compositions, i.e. the polyacid (i) and any emulsion copolymer to the number of equivalents of hydroxyl in the curable compositions, i.e. polyol (ii) plus the reactive β-hydroxyamide group containing polyol (iii) and any reactive waterproofing agent or reactive amphiphilic polyol, is from about 1/0.01 to about 1/3, preferably 1/0.2 or more, and may range as high as 1/1. To avoid an excess of volatile organic compounds (VOC's) and insure formation of a good cure network, an excess of equivalents of carboxy, anhydride, or salts thereof to the equivalents of hydroxyl in the curable compositions is preferred. To insure formation of a good network in the cured composition, the preferred ratio of the number of equivalents of carboxy, anhydride, or salts thereof to the number of equivalents of hydroxyl in the curable compositions is preferably 1/0.2 or less. The most preferred ratio of the number of equivalents of carboxy, anhydride, or salts thereof to the number of equivalents of hydroxyl in the polyol is from about 1/0.2 to about 1/0.8.

In one embodiment of this invention, the curable binder composition comprises a phosphorous-containing accelerator such as those disclosed in U.S. Patent No. 6,136,916. Preferably, the accelerator is selected from the group consisting of sodium hypophosphite, sodium phosphite, or a mixture thereof. The phosphorous-containing accelerator can also be an oligomer bearing phosphorous-containing groups such as, for example, an oligomer of acrylic acid formed in the presence of sodium hypophosphite by addition polymerization of the present invention, but a separate compound from the oligomer or co-oligomer serving as the binder of the curable composition of the present invention. The one or more phosphorous-containing accelerator may be used at a level of from 0 wt.% to 40 wt.%, based on the total weight of binder solids. The phosphorous-containing accelerators may be used in the amount of 0.1 wt.% or more, based on the total weight of binder solids, and up to 25 wt.%, or up to 20 wt.%, or, preferably, up to 15 wt.%, and, more preferably, up to 12 wt.%. When the phosphorous-containing accelerator comprises part of an addition (co)polymer or (co)oligomer, the wt.% of the phosphorous-containing accelerator is based on/determined by wt % of hypophosphite, phosphinate or phosphonate charged to the reactor as a fraction of the total batch solids.

The curable composition may be prepared by admixing the one or more polyacid, the one or more polyol, the one or more reactive β-hydroxyamide group containing polyol (iii), and, if desired, the one or more phosphorous-containing accelerator and any additional ingredients using conventional mixing techniques. Water may be admixed with the remainder of the composition at the point of use, and not before, to minimize shipping weight. The total solids of the curable compositions of the present invention may range up to 100 wt.%, based on the total weight of the composition, as in with an anhydrous and solvent free or a dried binder composition, or up to 70 wt.%, as is the case with solutions or dispersions, or up to 60 wt.%, or up to 50 wt.% ; such total solids may range as low as 0.5 wt.% or more, or 1 wt.% or more, or 3 wt.% or more, or 5 wt.% or more. The total solids of the curable compositions may be selected to provide compositions having a suitable viscosity for various means of treating substrates. For example, sprayable curable compositions may have a total solids of 5 wt.%. However, substrates may be dipped in or themselves contacted with curable compositions having a total solids of 10 wt.% or more. As used herein, the term "total solids" refers to the sum of the total amount of binder solids, plus any fillers or extenders.

In one embodiment, the one or more polyacid addition (co)polymer (i) of the curable composition comprises carboxyl- or anhydride-groups or salts thereof, and has one or more polyol (ii) present in the same addition copolymer. In another embodiment, the one or more salts of the carboxyl groups in the one or more polyacid (i) are salts of functional alkanolamines with at least two hydroxyl groups such as, for example, diethanolamine, triethanolamine, dipropanolamine, and diisopropanolamine, preferably, triethanolamine. In yet another embodiment, the one or more polyol and the one or more phosphorous-containing accelerator may be present in the same addition copolymer, which addition polymer may be mixed with one or more polyacid. In yet even another embodiment, the one or more carboxyl- or anhydride-group or salt thereof, the one or more polyol, and the one or more phosphorous-containing accelerator may be present in the same addition copolymer. In such embodiments, the curable composition may be prepared by mixing the polyacid (i) addition (co)polymer, reactive β-hydroxyamide group containing polyol (iii), and, optionally, any polyol (ii), reactive waterproofing agents or waterproofing polyol, one or more phosphorous-containing accelerator, and/or other ingredients using conventional mixing techniques.

The curable compositions may further contain conventional additives which can be added at any time. Suitable additives include one or more of each of an emulsifier; a pigment; a filler or extender, used in the amount of up to 40 wt.%, based on the total weight of binder solids; an anti-migration aid; a curing agent, e.g. urethanes, aldehyde condensates and aminoplasts, and epoxy resins, such as bisphenol epoxy resins; a coalescent; an anionic or a nonionic surfactant, including anionic phosphonates, maleates, sulfinates, and dodecyl benzene sulfonic acid (DDBSA), preferably nonionic surfactants having an HLB of 5-25 and non-aromatic sulfonates, used in the amount of 0.01 -5 wt.%, based on the total weight of binder solids; a spreading agent; a dust suppressing agent; a biocide; a plasticizer; a coupling agent; an anti-foaming agent, a corrosion inhibitor, particularly corrosion inhibitors and antioxidants effective at pH<4 such as thioureas, oxalates, and chromates, e.g. tin oxalate; a colorant; an antistatic agent; a lubricant; and a wax.

Suitable fillers or extenders may comprise microcrystalline silicas, including cristobalite or christobalite and tridymite, kaolin, bentonite, calcined aluminum silicate, wollastonite, calcium metasilicate, alkali aluminum silicate, diatomaceous silica, ground glass, nepheline syenite, hydrotalcite, mica, smectites, such as layered clays and phyllosilicates, including montmorillonite, bentonite, saponite, beidellite, montronite, hectorite, and stevensite, vermiculite, anhydrous aluminosilicate clay delaminated, titanium dioxide, zinc oxide, calcined clay and calcined silicates, such as calcined aluminum silicates and mixtures thereof. Kaolin clay, smectites or phyllosilicates may or may not be surface treated to render them hydrophobic, such as with trialkyl-arylammonium compounds.

Because the reactive β-hydroxyamide group containing polyol (iii) provides anti-foaming properties, anti-foaming agents are not necessary. If desired other anti-foaming agents may be included in the amount of up to 10 wt.% or more, based on the total weight of binder solids, or up to 5 wt.%, or up to 3 wt.% or up to 1 wt.% , or in the amount of 0.1 wt.% or more, or 0.5 wt.% or more; suitable anti-foaming agents include silicone oils, ethoxylated nonionics and hydrophobe-hydrophile-hydrophobe block copolymers, such as associative thickeners, each on the amount of from 0.001 to 5 wt.%, based on the total weight of binder solids.

Preferably, curable compositions for treating glass substrates comprise coupling agents, such as silanes, particularly hydrolyzable alkoxysilanes like 3-glycidoxypropyltrialkoxysilane, aminopropyltri(m)ethoxy silane, or the compounds available as SILQUEST^{™} A-187, 3-glycidoxypropyltrimethoxysilane, (OSi Specialties, Wilton, CT). Such coupling agents may be used in the amount of 0.1 wt.% or more, based on the total weight of binder solids, or 0.2 wt.% or more, or 0.5 wt.% or more, and such amounts may range up to 5 wt.%, or up to 2 wt.% , or up to 1.5 wt.% based on binder solids.

Preferably, to promote surface coverage, one or more surfactants or emulsifiers are added to the curable compositions immediately after the binder solids are admixed together. The one or more surfactants or emulsifiers help to maintain aqueous homogeneity at higher solids (>30 %) and storage temperatures equal to or higher than room temperature. Suitable surfactants may include nonionics, sulfonates, sulfates, phosphonates phosphates, maleates. Particularly useful are non-silicone and acetylenic group containing surfactants such as SURFYNOL^{™} (Air Products and Chemicals, Inc., Allentown, PA)and TERGITOL^{™} (The Dow Chemical Company, Midland, MI), as well as ethoxylated fatty alcohols, such as NEODOL^{™} (Shell Chemicals, Houston TX). Other formulation aids can be added to compatibilize the waterproofing agent with other components of the thermoset formulation. These can include reactive amphiphilic polyols, such as C₆ to C₁₂ glycols, e.g. hexylene glycol, and those polymeric materials described in US patent no. 4,797,223.

For use on substrates containing fines or finely divided materials, dust suppressing agents may desirably be added. Such dust suppressing agents may include one or more hydrocarbons having carbon numbers predominantly higher than C₂₅ and boiling above approximately 400°C (752°F). These can include non smoking hydrocarbon emulsions such as: MULREX^{™} non combustible oils (Exxonmobil Oil Corp., Fairfax, Va) and Garo 217 (G.O.V.I., NV, Drongen, Belguim). Such dust suppressing agents can be added at any time. They can be added as an emulsified aqueous dispersion or directly without emulsification in the amount of from 1 to 5 wt.%, preferably up to 3.0 wt.%, based on total binder solids. High boiling hydrocarbons, commonly referred to as solvent refined oils, can be mechanically dispersed into a dilute aqueous binder formulation prior to application. If equipment constraints and costs permit, high boiling silicone oils and silicon emulsions can also be used to suppress glass particulates generated during processing.

The present invention provides methods for treating one or more substrates by forming the curable composition of the present invention, contacting the substrate with the curable composition or applying the curable composition to the substrate, and heating the curable composition at a temperature of from 100°C to 400°C to dry and cure the composition. The substrate may be contacted with the curable composition by methods commonly described as, for example, coating, e.g. dip coating, sizing, saturating, bonding, and combinations thereof. The curable composition can be applied to a substrate by conventional techniques such as, for example, air or airless spraying, padding, saturating, roll coating, curtain coating, beater deposition, or coagulation. Curable compositions having a high viscosity, e.g. ≤40 centiPoise at STP, may preferably be applied to fibrous and composite substrates by dip or roll coating. Curable compositions having a lower viscosity may be spray applied to substrates.

In an alternative embodiment, the curable compositions may be dried, e.g. freeze dried or spray dried, to form coating powders, which are then applied, e.g. electrostatically or via a fluidized bed, on metal, wood and (ligno)cellulosic substrates.

In drying and curing the curable compositions, the duration, and temperature of heating, will affect the rate of drying, ease of processing or handling, and property development of the treated substrate. Suitable heat treatment at 100°C or more, and up to 400°C, may be maintained for from 3 seconds to 15 minutes. Preferably, heat treatment temperatures range 150°C or higher; such preferred heat treatment temperatures may range up to 225°C, or, more preferably, up to 200°C or, when using one or more phosphorous-containing accelerator, up to 150°C. Where the substrate contains wood, temperatures of 100°C to 220°C, are preferred.

Drying and curing can be effected in two or more distinct steps, if desired. For example, the curable composition can be first heated at temperatures and for times sufficient to substantially dry, but not to substantially cure the composition, followed by heating for a second time, at higher temperatures and/or for longer periods of time, to effect curing. Such procedures, referred to as "B-staging", can be used to provide binder-treated nonwovens, for example, in roll form, which can be cured later, with or without forming or molding into a particular configuration, concurrent with the curing process.

As polyacids (i) and polyacid polymers can be corrosive to certain types of processing equipment, certain types of corrosion control may preferably be practiced when handling solutions containing such polyacids, such as, for example, pH control, e.g. by using TEOA or basic polyols (ii), reduced use of phosphorous-containing accelerators and polymers containing them, and the use of materials such as stainless steel in the process equipment itself instead of more corrosive material.

Suitable substrates include, for example, heat-sensitive substrates, such as wood, including, solid wood, wood particles, fibers, chips, flour, pulp, and flakes; paper and cardboard; textiles, including cotton, linen, wool, and synthetic textiles from polyester, rayon, or nylon, and superabsorbent fibers; vegetable fibers, such as jute, sisal, flax, cotton and animal fibers; as well as heat resistant substrates, such as metal; plastic; fibers, such as glass and mineral fibers, aramid fibers, ceramic fibers, metal fibers, carbon fibers, polyimide fibers, and woven and nonwoven fabrics made therefrom. Heat-resistant nonwovens may also contain fibers which are not in themselves heat-resistant such as, for example, polyester fibers, rayon fibers, nylon fibers, and superabsorbent fibers, in so far as or in amounts such that they do not materially adversely affect the performance of the substrate.

Suitable nonwoven fabric substrates may comprise fibers that have been consolidated by purely mechanical means such as, for example, by entanglement caused by needle-punching, by an air-laid process, or by a wet-laid process; by chemical means, such as, for example, treatment with a polymeric binder; or by a combination of mechanical and chemical means before, during, or after nonwoven fabric formation.

Suitable applications for the heat-resistant substrates treated with the curable compositions of the present invention include non-wovens, for example, insulation batts or rolls to be used in ovens and in building construction, as reinforcing mats for roofing or flooring applications, as rovings, as microglass-based substrates for printed circuit boards or battery separators, as mineral or glass fiber-containing heat-resistant nonwoven fabrics impregnated with hot asphaltic compositions, for example, at temperatures of from 150°C to 250°C to make roofing shingles or roll roofing materials; composites as abrasives and stock or prepregs therefore, e.g. brake shoes and pads, clutch plates, as filter stock, e.g. for air duct filters, as tape stock, as reinforcement scrim in cementitious and non-cementitious coatings for masonry, or sheets or panels, as in ceiling tiles.

Suitable applications to strengthen heat-sensitive substrates treated with the curable compositions of the present invention include paper, cardboard and paper filters, e.g. paper oil- and air-filter stock; wood-containing articles, consolidated wood composite articles having structural integrity, such as wood chipboard and molded parts, and wood fibers and flakes consolidated into or suitable to be consolidated into fiberboard, hardboard, particleboard, oriented strand board, and engineered wood; curly pulp modification; nonwovens, such as cellulosic roofing tiles, window treatments, wall coverings, cellulosic laminating stock, nonwoven cellulosic felts, cellulosic wipes, industrial wipes; rayon nonwoven wipes, polyester/cotton woven fabrics and durable-press clothing.

The following non-limiting examples illustrate the curable aqueous composition and the use thereof as a binder for heat-resistant nonwovens.

### EXAMPLE 1: Beta-Hydroxyamide #1-Reaction Product Of ε-Caprolactone And Diethanolamine

To a 1L flask equipped with a condenser, a thermocouple, and a mechanical stirrer was added 157.5 grams (1.5 moles) of diethanolamine (DEOA). Starting at room temperature under one atmosphere of nitrogen, and without external heating, 171.2 grams (1.5 moles) of ε-caprolactone was added to the reaction flask by pipette in small aliquots over the course of 1 hour. The reaction mixture exhibited a slight exotherm to 31°C. After the addition of ε-caprolactone was complete the reaction mixture was stirred for another hour. After that hour, 82.0 grams of deionized water was added yielding an 80% active material.

### EXAMPLE 2: Beta-Hydroxyamide #2 - Reaction Product Of y-Butyrolactone And Diethanolamine

To a 1L flask equipped with a condenser, a thermocouple, and a mechanical stirrer was added 157.5 grams (1.5 moles) of DEOA. Starting at room temperature under one atmosphere of nitrogen, and without external heating 127.9 grams (1.5 moles) of y-butyrolactone was added to the reaction flask by pipette in small aliquots over the course of 1.5 hours. The reaction mixture exhibited a slight exotherm to 27 °C. After the addition of γ-butyrolactone was complete the reaction mixture was stirred for another hour. After that hour 69.8 grams of deionized water was added yielding an 80% active material.

### EXAMPLE 3: Preparation of Poly(acrylic acid) (pAA) by Gradual Addition Aqueous Solution Polymerization.

2-propenoic acid telomer with phosphinic acid monosodium salt (CAS# 73256-97-0) was prepared via gradual addition sodium hypophosphite chain transfer polymerization. To an 1892.5 liter (500 gallon) reactor equipped with each of a mechanical stirrer, condenser, thermometer and inlets for the gradual additions of monomer, initiator and sodium hypophosphite solutions, was added 645,000 grams of deionized (DI) water. The contents of the flask were heated to 90°C, and a solution of 48,375 grams of sodium hypophosphite monohydrate dissolved in 60,000 grams of DI water was added. A monomer charge of 1,075,000 grams of glacial acrylic acid was prepared. A chain regulator solution was prepared by dissolving 48,375 grams of sodium hypophosphite monohydrate in 60,000 grams of DI water. An initiator solution was prepared by dissolving 10,750 grams of sodium persulfate in 60,000 grams of DI water. The separate feeds of the monomer charge, the chain regulator solution, and the initiator solution into the heated stirring flask were begun simultaneously and were continued linearly and separately for 120 minutes, 95 minutes, and 120 minutes respectively, while maintaining the contents of the flask at 90°C to 92° C. After the feeds were completed, the contents of the flask were maintained at 90°C to 92° C for 30 minutes. The resulting solution of poly(acrylic acid) had a solids content of 52.1 wt.%.

In the following Examples 4-13 and 17-28, wet tensile strength was measured as follows:

A binder impregnated microfiber filter (Whatman International Inc., Maidstone England, GF/A, catalog No. 1820 866, in 20.3 cm x 25.4 cm sheets) was prepared by drawing the paper through a trough filled with 300 grams of a 5.5 weight % pre-mixed aqueous binder solution that has been further mixed by agitation, sandwiching the soaked sample between two cardboard sheets to absorb excess binder, and pressing between the two cardboard sheets in a with a Birch Bros. Padder, 68.9476 kPa/ speed 5 m/min. The resulting samples are dried @ 90 °C for 1.5 min in a Mathis Oven that is vented or equipped with a devolatilizer and then are cured in the same type of Mathis Oven @ 190 °C/ 30 seconds, 190°C/60 seconds, and 190°C/ 180 sec. right after the initial drying. "Add on" is the wt.% based on filter sheet weight of binder solids retained on the filter sheet after drying and before curing. The average add on observed in these examples was 14 wt.%. The cured filter paper was then cut into 2.54 cm x 10.16 cm strips for tensile test. Just prior to testing, the test strips were immersed in 85°-90°C water for 30 minutes and mounted wet in an Instron tensile tester. The tester was calibrated with 1 kg dead load with a full range of 10 kg. Strip was mounted on pneumatic grips, and tested with crosshead speed of 2.54 cm/ min. Each tensile strength was recorded as the peak force measured during parting or breaking each tested strip in two. Seven (7) strips were tested per example. Wet tensile strength was determined at 22°C, 55% relative humidity and 760 mm Hg.

### EXAMPLES 4-10:

The following Examples show the benefit of using reactive β-hydroxyamide group containing polyols to crosslink polymeric polyacids, such as poly(acrylic acid) (pAA). A control system comprises pAA with triethanolamine (TEOA) as the crosslinker. See the formulations in TABLE 1, below. As shown in TABLE 2, below, all formulations comprising reactive β-hydroxyamide group containing polyols show higher wet tensile strength than the control and the tensile strength develops faster, the tensile strength at 30 seconds of cure being roughly equal or higher than the control system at 180 seconds of cure at 190 °C. The low energy cure benefit with reactive β-hydroxyamide group containing polyols was observed with or without the addition of sulfuric acid esterifying catalysts in the formulation.

**TABLE 1: Formulations**

| **Example** | **4** | **5** | **6** | **7** | **8** | **9** | **10** **(control)** |
|---|---|---|---|---|---|---|---|
| pAA of Example 3 | 95.14 | 95.14 | 95.14 | 95.14 | 95.14 | 95.14 | 95.14 |
| TEOA (98 wt.% in water) | 0 | 0 | 0 | 0 | 0 | 0 | 17.44 |
| Post-add β-hydroxyamide #1 of Example 1 (80wt.% in water) | 31.37 | 31.37 | 31.37 | 0 | 0 | 0 | 0.00 |
| Post-add β-hydroxyamide #2 of Example 2 (80wt.% in water) | 0 | 0 | 0 | 27.36 | 27.36 | 27.36 | 0.00 |
| Sulfuric Acid (96wt.% in water) | 0.00 | 1.91 | 3.20 | 0.00 | 1.91 | 3.20 | 3.20 |
| Water | 22.75 | 24.50 | 25.50 | 20.50 | 22.25 | 23.25 | 23.75 |
| | | | | | | | |
| Total weight | 149.26 | 152.92 | 155.21 | 143.00 | 146.66 | 148.95 | 139.53 |
| Total Solids, % | 50.0% | 50.0% | 50.1% | 50.0% | 50.0% | 50.0% | 50.0% |
| Mole ratio of H₂SO₄/AA | 0.000 | 0.030 | 0.050 | 0.000 | 0.030 | 0.050 | 0.050 |
| pH | 3.0 | 1.8 | 1.2 | 3.0 | 2.0 | 1.4 | 3.0 |

**TABLE 2: Wet Tensile Strength**

| **Example** | **Polymeric Polyacid (i)** | **pH** | **Reactive β-hydroxyamide group containing polyol (iii)** | **Ratio of equiv. OH from (iii) to equiv. carboxylic acid from (i)** | **Add on %** | **Wet Tensile (N/cm) 30 sec. cure @190°C** | **Wet Tensile (N/cm) 60sec. cure @190°C** | **Wet Tensile (N/cm) 180 sec. cure @190°C** |
|---|---|---|---|---|---|---|---|---|
| **4** | Poly(acrylic acid) Example 3 | 3.0 | β-hydroxyamide #1 | 0.55 | 4% | 1.2 | 1.6 | 1.6 |
| **5** | Poly(acrylic acid) Example 3 | 1.8 | β-hydroxyamide #1 | 0.55 | 4% | 1.4 | 1.6 | 1.8 |
| **6** | Poly(acrylic acid) Example 3 | 1.2 | β-hydroxyamide #1 | 0.55 | 4% | 1.3 | 1.6 | 1.6 |
| **7** | Poly(acrylic acid) Example 3 | 3.0 | β-hydroxyamide #2 | 0.55 | 4% | 1.0 | 1.3 | 1.5 |
| **8** | Poly(acrylic acid) Example 3 | 2.0 | β-hydroxyamide #2 | 0.55 | 4% | 1.0 | 1.2 | 1.5 |
| **9** | Poly(acrylic acid) Example 3 | 1.4 | β-hydroxyamide #2 | 0.55 | 4% | 1.0 | 1.1 | 1.4 |
| **10 (control)** | Poly(acrylic acid) Example 3 | 3.0 | TEOA | 0.55 | 5% | 0.7 | 0.8 | 1.0 |

### EXAMPLES 11-13

The following Examples 12-13 show that reactive β-hydroxyamide group containing polyol containing binders of the present invention, shown in TABLE 3, effectively crosslink a polymeric polyacid binder that has first been neutralized to a high pH, pH > 9, with a volatile base, such as ammonia or AMP-95. The results in TABLE 4, below, in Example 11, show that the no tensile strength develops if a high level of fixed base, e.g. sodium hydroxide, is used to neutralize the polyacid binder.

**TABLE 3: Formulations:**

| **Example** | **11** | **12** | **13** |
|---|---|---|---|
| Poly(acrylic acid) of Example 3 | 95.14 | 95.14 | 95.14 |
| Sodium Hydroxide (50.0 wt.% in water) | 48.88 | 0 | 0 |
| Ammonia (concentrated aqueous 28-30 wt.% in water) | 0.00 | 45.45 | 0.00 |
| ¹AMP-95 (95 wt.% in water) | 0.00 | 0.00 | 61.54 |
| post add β-hydroxyamide #2 (80wt.% , in water) | 27.36 | 27.36 | 27.36 |
| Water | 20.40 | 20.50 | 76.00 |
| **Total** | 191.78 | 188.45 | 260.04 |
| Total Solids, weight % in water | 50.0% | 37.9% | 50.0% |
| pH | 9.2 | 9.1 | 9.1 |

| | | | |
|---|---|---|---|
| 1. AMP-95: 2-amino-2-methyl-1-propanol,CAS#: 124-68-5, MW =89.14, Angus Chemical Co., Bullalo Grove, IL. USA | | | |

**TABLE 4: Wet Tensile Strength**

| **Example** | **Polymeric Polyacid (i))** | **Formulation pH** | **Reactive B-Hydroxyamide Group Containing Polyols (iii)** | **Ratio of equiv.OH from (iii) to equiv. carboxylic acid from** (i) | **Ad d on %** | **Wet Tensile N/cm 30 sec. cure @190°C** | **Wet Tensile, N/cm 60sec. cure @190°C** | **Wet Tensile N/cm 180 sec. cure @190°C** |
|---|---|---|---|---|---|---|---|---|
| **11** | Poly(acrylic acid) of Example 3 | 9.2 | beta-hydroxy amide #2 | 0.55 | 20. 6 | No strength | | |
| **12** | Poly(acrylic acid) of Example 3 | 9.1 | beta-hydroxy amide #2 | 0.55 | 14. 6 | 1.2 | 1.4 | 1.9 |
| **13** | Poly(acrylic acid) of Example 3 | 9.1 | beta-hydroxy amide #2 | 0.55 | 15. 3 | 0.5 | 1.1 | 1.8 |

### EXAMPLE 14: Preparation of Poly(85AA/15TMPMAE)

To a 3-liter flask equipped with a condenser, a thermocouple, and a mechanical stirrer was added 792.5 grams of deionized water and 43.3 grams of sodium hypophosphite (SHP). A nitrogen atmosphere was established in the flask and the initial contents were heated to 92°C with stirring. Once the flask contents reached 92°C, a solution of 2.6 grams of sodium persulfate in 13.1 grams deionized water was added. An initial monomer mix of 515.9 grams of acrylic acid and 130.1 grams of trimethylolpropane monoallyl ether (TMPMAE) was added gradually over 90 minutes. Once addition of the initial monomer mix was complete, a second monomer stream consisting of 221.1 grams of acrylic acid was added gradually over 30 minutes. During the addition of the first and the second monomer stream, the reaction mixture was maintained at 94 °C and two separate aqueous solutions were gradually added gradually, the first consisting of 23.5 grams of sodium persulfate in 99.2 grams of deionized water added over 120 minutes and the second consisting of 43.3 grams of sodium hypophosphite in 111.7 grams of deionized water added over 105 minutes. Once addition of the monomer and the sodium persulfate solution was complete, the reaction mixture was held at 94 °C for 30 minutes and then cooled to room temperature. The resulting copolymer solution had a solids content of 48.8 wt.%.

### EXAMPLES 15-16: Preparation of Addition Copolymers

The procedure of Example 14 was followed in Examples 15 and 16, with the changes shown in Table 5, below.

**TABLE 5: Copolymer Formulations, Reaction Mixtures and Feeds**

| **EXAMPLE** | **Copolymer** | **Initial Monomer Mix** | | **Second Monomer Stream** |
|---|---|---|---|---|
| | Net Composition (wt.%) | Wt. AA (grams) | Wt TMPMAE (grams) | Wt AA (grams) |
| **15** | 80AA/20TMPMAE | 485.6 | 173.4 | 208.1 |
| **16** | 76AA/24TMPMAE | 460.7 | 208.1 | 197.6 |

### EXAMPLES 17 - 28

The following examples show that compositions (TABLES 6A and 6B) comprising β-hydroxyamide group containing polyols will effectively crosslink copolymeric polyacids containing both carboxy and hydroxy functionality.

**TABLE 6A: Formulations**

| **Example** | **17** | **18** | **19** | **20** | **21** | **22** |
|---|---|---|---|---|---|---|
| pAA of Example 3 | 95.14 | 95.14 | 95.14 | 0 | 0 | 0 |
| Poly(85AA/15TMPMAE) of Example 14 | 0 | 0 | 0 | 124.83 | 124.83 | 124.83 |
| Poly (80AA/20TMPAE) (48.1wt.% in water) of Example 15 | 0 | 0 | 0 | 0 | 0 | 0 |
| Poly(76AA/24TMPAE) (48.3wt.% in water) of Example 16) | 0 | 0 | 0 | 0 | 0 | 0 |
| Sodium Hypophosphite Monohydrate (45wt.% in water) | 3.00 | 3.00 | 3.00 | 0 | 0 | 0 |
| Triethanolamine (98wt.% in water) | 0 | 0 | 0 | 14.55 | 0 | 0 |
| β-hydroxyamide #2 (80wt.% in water) | 27.36 | 0 | 0 | 0 | 22.82 | 0 |
| β-hydroxyamide #1 (80wt.% in water) | 0 | 31.37 | 31.37 | 0 | 0 | 26.16 |
| Sulfuric Acid (96%) | 1.91 | 0.00 | 1.91 | 3.19 | 1.91 | 1.91 |
| Water | 21.87 | 22.52 | 24.29 | 13.92 | 12.48 | 14.47 |
| | | | | | | |
| Total | 149.28 | 152.03 | 155.71 | 156.49 | 162.04 | 167.37 |
| Total Solids, weight % | 50.00% | 50.00% | 50.00% | 50.00% | 50.00% | 50.00% |
| pH | 2.0 | 3.0 | 2.0 | 3.1 | 2.1 | 2.0 |

| | | | | | | |
|---|---|---|---|---|---|---|
| AA= acrylic acid TMPMAE= trimethylolpropane monoallyl ether | | | | | | |

**TABLE 6B: Formulations**

| **Example** | **23** | **24** | **25** | **26** | **27** | **28** |
|---|---|---|---|---|---|---|
| pAA of Example 3 | 0 | 0 | 0 | 0 | 0 | 0 |
| Poly(85AA/15TMPMAE) of Example 14 | 0 | 0 | 0 | 0 | 0 | 0 |
| Poly (80AA/20TMPAE) of Example 15 | 134.61 | 134.61 | 134.61 | 0 | 0 | 0 |
| Poly(76AA/24TMPAE) of Example 16) | 0 | 0 | 0 | 141.38 | 141.38 | 141.38 |
| Sodium Hypophosphite Monohydrate (45wt.% in water) | 0 | 0 | 0 | 0 | 0 | 0 |
| Triethanolamine (98 wt.% in water) | 13.34 | 0 | 0 | 12.22 | 0 | 0 |
| β-hydroxyamide #2 (80 wt.% in water) | 0 | 20.92 | 0 | 0 | 19.16 | 0 |
| β-hydroxyamide #1 (80 wt.% in water) | 0 | 0 | 23.99 | 0 | 0 | 21.97 |
| Sulfuric Acid (96%) | 3.19 | 1.91 | 1.91 | 3.19 | 1.91 | 1.91 |
| Water | 10.62 | 9.18 | 11.05 | 9.75 | 8.35 | 10.00 |
| Total | 161.76 | 166.62 | 171.56 | 166.54 | 170.80 | 175.26 |
| Total Solids, weight % | 50.00 % | 50.00 % | 50.00 % | 50.00 % | 50.00 % | 50.00 % |
| pH | 3.1 | 2.1 | 2.1 | 3.0 | 2.1 | 2.1 |

As shown in Examples 17-19, 21-22 and 24-25 in TABLE 7, below, the reactive β-hydroxyamide group containing polyols, especially those made by reaction of DEOA with ε-caprolactone (Examples 18-19, 22, and 25), improve the early wet tensile strength of binder treated fiberglass filter paper after a 30 second cure @ 190°C relative to TEOA polyols. See Examples 20 and 23 for comparison. Further, even when used in a lower ratio of hydroxyl equivalents from the reactive polyol (iii) to carboxylic acid equivalents from the polymeric polyacid (i), (0.39), the reactive β-hydroxyamide group containing polyols improve the wet tensile strength of binder treated fiberglass filter paper after 60 second and 180 second cures @ 190°C relative to TEOA polyols.

**TABLE 7: Wet Tensile Strength**

| **Example** | **pH** | **Reactive β-hydroxyamide group containing polyols (iii)** | **Ratio of equiv.OH from (iii) to equiv. carboxylic acid from polyacid (i)** | **Add on %** | **Wet Tensile N/cm 30 sec. cure @190° C** | **Wet Tensile N/cm 60sec. cure @190° C** | **Wet Tensile N/cm 180 sec. cure @190° C** |
|---|---|---|---|---|---|---|---|
| **17** | 2.0 | β-hydroxyamide #2 | 0.55 | 13% | 1.3 | 1.5 | 1.6 |
| **18** | 3.0 | β-hydroxyamide #1 | 0.55 | 13% | 1.4 | 1.6 | 1.6 |
| **19** | 2.0 | β-hydroxyamide #1 | 0.55 | 13% | 1.4 | 1.5 | 1.6 |
| **20 Comparative** | 3.1 | TEOA | 0.46 | 14% | 0.9 | 1.0 | 1.1 |
| **21** | 2.1 | β-hydroxyamide #2 | 0.46 | 14% | 1.2 | 1.2 | 1.4 |
| **22** | 2.0 | β-hydroxyamide #1 | 0.46 | 14% | 1.3 | 1.4 | 1.5 |
| **23 Comparative** | 3.1 | TEOA | 0.42 | 14% | 0.8 | 1.0 | 1.2 |
| **24** | 2.1 | β-hydroxyamide #2 | 0.42 | 14% | 1.1 | 1.5 | 1.5 |
| **25** | 2.1 | β-hydroxyamide #1 | 0.42 | 14% | 1.3 | 1.4 | 1.6 |
| **26 Comparative** | 3.0 | TEOA | 0.39 | 14% | 1.2 | 1.3 | 1.4 |
| **27** | 2.1 | β-hydroxyamide #2 | 0.39 | 12% | 1.0 | 1.3 | 1.5 |
| **28** | 2.1 | β-hydroxyamide #1 | 0.39 | 13% | 1.0 | 1.4 | 1.5 |

## Claims

1. A curable composition comprising:
(i) one or more polyacid comprising at least two carboxylic acid groups, anhydride groups, or salts thereof;
(ii) optionally, one or more polyol comprising at least two hydroxyl groups; and
(iii) one or more reactive β-hydroxyamide group containing polyol of the following formula (I), which is the reaction product of a lactone or other cyclic ester and an alkanolamine: 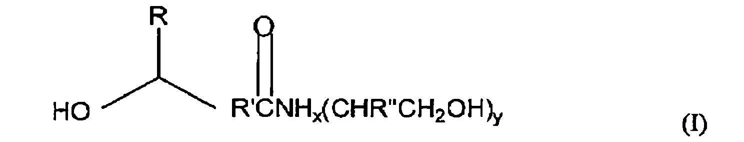
in which formula, R and R" independently represent H, or any monovalent C₁ to C₁₈ linear or branched alkyl radical, which radical may comprise one or two aryl or cycloalkyl group, one or more hydroxyl, amine, thiol, amide, carboxyl or alkenyl group, or combinations thereof; R' represents either a covalent bond or a divalent C₁ to C₅ alkylene radical where the alkylene radical may bear alkyl group substituents; y - is the integer 1 or 2; x is 0 or 1, such that (x + y) =2;
wherein the ratio of the number of equivalents of said carboxylic acid groups, anhydride groups, or salts thereof to the number of equivalents of said hydroxyl groups is from 1/0.01 to 1/3,
wherein the one or more polyacid (i) is chosen from a polymeric polyacid and a low molecular weight polybasic acid having a molecular weight of less than 1000.

2. A composition as claimed in claim 1, wherein the said one or more reactive-hydroxyamide group containing polyol (iii) comprises 10 to 100 wt.%, based on the total weight of the said polyol (ii) plus the said reactive -hydroxyamide group containing polyol (iii).

3. A composition as claimed in claim 1, further comprising one or more phosphorous-containing accelerator.

4. A composition as claimed in claim 1, wherein the said one or more polyol (ii) comprises an alkanolamine.

5. A composition as claimed in claim 1, further comprising water.

6. A composition as claimed in claim 1, further comprising one or more reactive waterproofing agents.

7. A composition as claimed in claim 1, further comprising one or more coupling agents.

8. A composition as claimed in claim 1, wherein the said one or more polyacid (i) comprises an emulsion copolymer or the said composition further comprises a waterproofing emulsion (co)polymer.

9. A method for treating substrates comprising:
forming a curable aqueous composition comprising admixing with water or one or more aqueous solvent (i) one or more polyacid comprising at least two carboxylic acid groups, anhydride groups, or salts thereof; (ii) optionally, one or more polyol comprising at least two hydroxyl groups; and (iii) one or more reactive β-hydroxyamide group containing polyol of the following formula (I), formed by the reaction of a lactone and an alkanolamine: 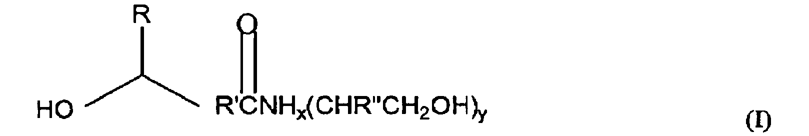 in which formula, R and R" independently represent H, or monovalent C₁ to C₁₈ linear or branched alkyl radicals which may contain aryl, cycloalkyl and alkenyl groups; R' represents either a covalent bond or a divalent C₁ to C₅ alkylene radical where the alkylene radical may bear alkyl group substituents; y is the integer 1 or 2; x is 0 or 1, such that (x + y) =2; wherein the ratio of the number of equivalents of said carboxylic acid groups, anhydride groups, or salts thereof to the number of equivalents of said hydroxyl groups is from 1/0.01 to 1/3;
contacting said substrate with said curable aqueous composition or, alternatively, applying said curable aqueous composition to said substrate; and
heating said curable aqueous composition at a temperature of from 100°C to 400°C, wherein the one or more polyacid (i) is chosen from a polymeric polyacid and a low molecular weight polybasic acid having a molecular weight of less than 1000.

10. A fibrous article, non-woven article or composite prepared by the method as claimed in claim 9.

## Patentansprüche

1. Härtbare Zusammensetzung, umfassend:
(i) eine oder mehrere Polysäuren, umfassend mindestens zwei Carbonsäuregruppen, Anhydridgruppen oder Salze davon,
(ii) gegebenenfalls ein oder mehrere Polyole, umfassend mindestens zwei Hydroxylgruppen, und
(iii) ein oder mehrere Polyole der folgenden Formel (I), enthaltend eine reaktive Hydroxyamidgruppe, welches das Reaktionsprodukt eines Lactons oder eines anderen cyclischen Esters und eines Alkanolamins ist: 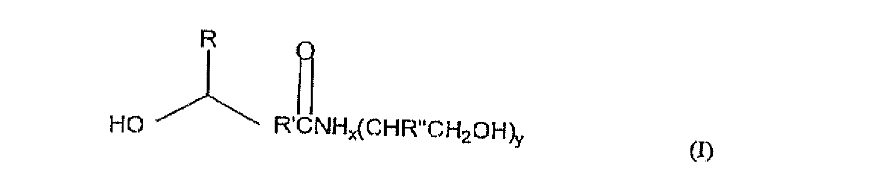
wobei in der Formel R und R" unabhängig H oder jedweden monovalenten linearen oder verzweigten C₁- bis C₁₈-Alkylrest darstellen, wobei der Rest ein oder zwei Aryl- oder Cycloalkylgruppen, eine oder mehrere Hydroxyl-, Amin-, Thiol-, Amid-, Carboxyl- oder Alkenylgruppen oder Kombinationen davon umfassen kann, R' entweder eine kovalente Bindung oder einen divalenten C₁- bis C₅-Alkylenrest darstellt, wobei der Alkylenrest Alkylgruppensubstituenten tragen kann, y die ganze Zahl 1 oder 2 ist, x 0 oder 1 ist, derart daß (x + y) = 2 ist,
wobei das Verhältnis der Anzahl von Äquivalenten der Carbonsäuregruppen, Anhydridgruppen oder Salze davon zu der Anzahl von Äquivalenten der Hydroxylgruppen von 1/0,0,1 bis 1/3 beträgt,
wobei die eine oder mehreren Polysäuren (i) aus einer polymeren Polysäure und einer polybasischen Säure mit geringem Molekulargewicht mit einem Molekulargewicht von weniger als 1000 ausgewählt ist.

2. Zusammensetzung nach Anspruch 1, wobei das eine oder die mehreren Polyole (iii), enthaltend eine reaktive Hydroxyamidgruppe, 10 bis 100 Gew.-% umfassen, bezogen auf das Gesamtgewicht des Polyols (ii) zuzüglich des Polyols (iii), enthaltend eine reaktive Hydroxyamidgruppe.

3. Zusammensetzung nach Anspruch 1, weiter ein oder mehrere phosphorhaltige Beschleunigungsmittel umfassend.

4. Zusammensetzung nach Anspruch 1, wobei das eine oder die mehreren Polyole (ii) ein Alkanolamin umfassen.

5. Zusammensetzung nach Anspruch 1, weiter Wasser umfassend.

6. Zusammensetzung nach Anspruch 1, weiter ein oder mehrere reaktive wasserdichtmachende Mittel umfassend.

7. Zusammensetzung nach Anspruch 1, weiter ein oder mehrere Kupplungsmittel umfassend.

8. Zusammensetzung nach Anspruch 1, wobei die eine oder die mehreren Polysäuren (i) ein Emulsionscopolymer umfassen oder die Zusammensetzung weiter ein wasserdichtmachendes Emulsions(co)polymer umfaßt.

9. Verfahren zum Behandeln von Substraten, umfassend:
das Bilden einer härtbaren wässrigen Zusammensetzung, umfassend das Mischen mit Wasser oder einem oder mehreren wässrigen Lösungsmitteln von (i) einer oder mehreren Polysäuren, umfassend mindestens zwei Carbonsäuregruppen, Anhydridgruppen oder Salze davon, (ii) gegebenenfalls einem oder mehreren Polyolen, umfassend mindestens zwei Hydroxylgruppen, und (iii) einem oder mehreren Polyolen der folgenden Formel (I), enthaltend eine reaktive β-Hydroxyamidgruppe, gebildet durch die Reaktion eines Lactons und eines Alkanolamins: 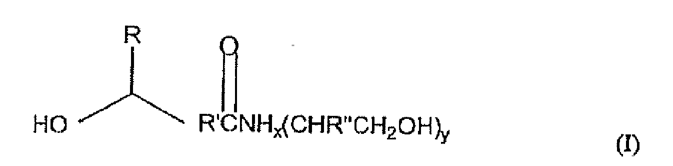 wobei in der Formel R und R" unabhängig H oder jedwede monovalente lineare oder verzweigte C₁- bis C₁₈-Alkylreste darstellen, welche Aryl-, Cycloalkyl- oder Alkenylgruppen enthalten können, R' entweder eine kovalente Bindung oder einen divalenten C₁- bis C₅-Alkylenrest darstellt, wobei der Alkylenrest Alkylgruppensubstituenten tragen kann, y die ganze Zahl 1 oder 2 ist, x 0 oder 1 ist, derart daß (x + y) = 2 ist,
wobei das Verhältnis der Anzahl von Äquivalenten der Carbonsäuregruppen, Anhydridgruppen oder Salze davon zu der Anzahl von Äquivalenten der Hydroxylgruppen von 1/0,01 bis 1/3 beträgt,
das Inkontaktbringen des Substrates mit der härtbaren wässrigen Zusammensetzung oder alternativ das Anwenden der härtbaren wässrigen Zusammensetzung auf das Substrat, und
das Erwärmen der härtbaren wässrigen Zusammensetzung bei einer Temperatur von 100°C bis 400°C, wobei die eine oder die mehreren Polysäuren (i) aus einer polymeren Polysäure und einer polybasischen Säure mit geringem Molekulargewicht mit einem Molekulargewicht von weniger als 1000 ausgewählt sind.

10. Faserartiger Gegenstand, Vliesstoffgegenstand oder Komposit, hergestellt durch das Verfahren nach Anspruch 9.

## Revendications

1. Composition durcissable comprenant :
(i) un ou plusieurs polyacides comprenant au moins deux groupes acide carboxylique, groupes anhydride, ou leurs sels;
(ii) éventuellement, un ou plusieurs polyols comprenant au moins deux groupes hydroxyle; et
(iii) un ou plusieurs polyols contenant un groupe β-hydroxyamide réactif de la formule (I) suivante, qui est le produit de réaction d'une lactone ou de tout autre ester cyclique et d'une alcanolamine : 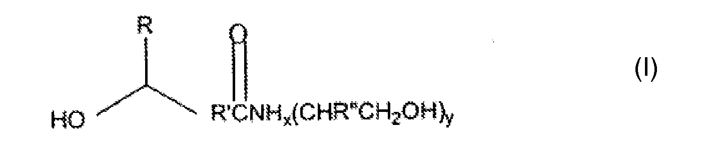
formule dans laquelle, R et R" représentent indépendamment H, ou tout radical alkyle linéaire ou ramifié en C₁ à C₁₈ monovalent, lequel radical peut comprendre un ou deux groupes aryle ou cycloalkyle, un ou plusieurs groupes hydroxyle, amine, thiol, amide, carboxyle ou alcényle, ou leurs combinaisons; R' représente soit une liaison covalente, soit un radical alkylène en C₁ à C₅ où le radical alkylène peut comporter comme substituants des groupes alkyle; y est le nombre entier 1 ou 2; x est 0 ou 1, de telle sorte que (x + y) = 2;
dans laquelle le rapport du nombre d'équivalents desdits groupes acide carboxylique, groupes anhydride ou leurs sels au nombre d'équivalents desdits groupes hydroxyle est de 1/0,01 à 1/3,
dans laquelle le ou les plusieurs acides (i) sont choisis parmi un polyacide polymérique et un acide polybasique de bas poids moléculaire ayant un poids moléculaire inférieur à 1000.

2. Composition suivant la revendication 1, dans laquelle le ou les polyols contenant un groupe hydroxyamide réactif (iii) précités constituent 10 à 100 % en poids, par rapport au poids total dudit polyol (ii) plus ledit polyol contenant un groupe hydroxyamide réactif (iii).

3. Composition suivant la revendication 1, comprenant de plus un ou plusieurs accélérateurs contenant du phosphore.

4. Composition suivant la revendication 1, dans laquelle le ou les polyols (ii) précités comprennent une alcanolamine.

5. Composition suivant la revendication 1, comprenant de plus de l'eau.

6. Composition suivant la revendication 1, comprenant de plus un ou plusieurs agents hydrofuges réactifs.

7. Composition suivant la revendication 1, comprenant de plus un ou plusieurs agents de couplage.

8. Composition suivant la revendication 1, dans laquelle le ou les polyacides (i) précités comprennent un copolymère en émulsion ou ladite composition comprend de plus un (co)polymère en émulsion hydrofuge.

9. Procédé de traitement de substrats comprenant :
la formation d'une composition aqueuse durcissable comprenant le mélange avec de l'eau ou un ou plusieurs solvants aqueux (i) un ou plusieurs polyacides comprenant au moins deux groupes acide carboxylique, groupes anhydride, ou leurs sels; (ii) éventuellement, un ou plusieurs polyols comprenant au moins deux groupes hydroxyle; et (iii) un ou plusieurs polyols contenant un groupe β-hydroxyamide réactif de la formule (I) suivante, formé par la réaction d'une lactone et d'une alcanolamine : 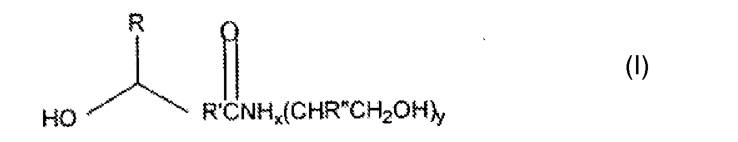 formule dans laquelle, R et R" représentent indépendamment H, ou des radicaux alkyle linéaires ou ramifiés en C₁ à C₁₈ monovalents qui peuvent contenir des groupes aryle, cycloalkyle et alcényle; R' représente soit une liaison covalente, soit un radical alkylène en C₁ à C₅ où le radical alkylène peut comporter comme substituants des groupes alkyle; y est le nombre entier 1 ou 2; x est 0 ou 1, de telle sorte que (x + y) = 2; dans laquelle le rapport du nombre d'équivalents desdits groupes acide carboxylique, groupes anhydride ou leurs sels au nombre d'équivalents desdits groupes hydroxyle est de 1/0,01 à 1/3;
la mise en contact dudit substrat avec ladite composition aqueuse durcissable ou, suivant une variante, l'application de ladite composition aqueuse durcissable audit substrat; et
le chauffage de ladite composition aqueuse durcissable à une température de 100°C à 400°C, dans lequel le ou les polyacides (i) sont choisis parmi un polyacide polymérique et un acide polybasique de bas poids moléculaire ayant un poids moléculaire inférieur à 1000.

10. Article fibreux, article non tissé ou composite préparé par le procédé suivant la revendication 9.
